Europäisches Patentamt

(19) European Patent Office

Office européen des brevets

(11) Numéro de publication: **0 054 441**
**B1**

(12) **FASCICULE DE BREVET EUROPEEN**

(45) Date de publication du fascicule du brevet: **19.06.85**

(51) Int. Cl.⁴: **G 01 N 27/90, G 01 N 37/00**

(21) Numéro de dépôt: **81401489.0**

(22) Date de dépôt: **25.09.81**

(54) **Dispositif pour le contrôle in situ d'aubes de turbomachine.**

(30) Priorité: **16.10.80 FR 8022100**

(43) Date de publication de la demande:
**23.06.82 Bulletin 82/25**

(45) Mention de la délivrance du brevet:
**19.06.85 Bulletin 85/25**

(84) Etats contractants désignés:
**BE CH DE FR GB LI NL SE**

(56) Documents cités:
**DE-A-2 603 336**
**FR-A-2 051 987**
**US-A-3 537 300**
**US-A-3 570 304**
**US-A-4 142 154**

(73) Titulaire: **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur: **Vaerman, Jean Fernand**
**2 allée des Perce-Neige**
**F-77240 Vert Saint Denis (FR)**

(74) Mandataire: **Moinat, François et al**
**S.N.E.C.M.A. Service des Brevets Boîte Postale 81**
**F-91003 Evry Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

L'invention telle qu'elle est définie dans le préambule de la revendication concerne un dispositif pour le contrôle in situ d'aubes de turbomachine par les courants de Foucault.

La rupture d'une aube de turbomachine entraîne généralement des dégats importants. Il est donc important de pouvoir déceler tout défaut de structure métallurgique ou physique, non seulement de surface, mais également interne. L'emploi de manière connue des courants de Foucault offre cette possibilité et permet, à l'aide d'une sonde déplacée à la surface de l'aube, de déterminer l'existence et l'emplacement des défauts.

La position de la sonde par rapport à la surface explorée est un facteur important dans la précision des résultats et un dispositif permettant de fixer ce facteur a été décrit lors du Symposium de la Federal Aeronautical Agency sur la fiabilité, tenu à Washington le 18 Novembre 1965. Il se compose d'un bloc de positionnement dont la forme épouse celle de la pale d'aube, percé de cinq orifices dans lesquels on adapte successivement la sonde de contrôle. Ce bloc définit donc parfaitement la position de la sonde par rapport à la surface, mais ne permet que le contrôle de zones discrètes. Cette mesure point par point présente l'inconvénient de ne pas détecter les défauts de petites tailles situés entre les points de mesure.

On peut pallier cette lacune en munissant la sonde d'une butée et en déplaçant manuellement l'ensemble au contact du bord de la pale. L'emploi d'un personnel qualifié et très entraîné ne permet toutefois pas d'éliminer les difficultés de l'exploration manuelle in situ dues à l'exiguïté de l'espace et, par conséquent, la fiabilité des mesures n'est pas très bonne.

Le brevet US—A—3 570 304 décrit un dispositif porte sonde pour le contrôle d'aubes par ultrasons comprenant un chassis muni de cales de positionnement sur l'aube et d'une sonde dont on peut ajuster l'orientation par rapport au chassis. Cependant, un tel dispositif n'est pas destiné au contrôle in situ car l'extrémité de l'aube doit être suffisamment dégagée pour permettre l'introduction du chassis axialement. De plus, les moyens d'ajustement ne permettent pas de parcours d'une longueur significative mais seulement un positionnement par rapport à la surface de l'aube.

Le brevet US—A—3 537 300 concerne un dispositif de guidage pour une sonde à ultra-sons comprenant un bâti dans lequel tourne une tige de guidage d'un chariot sur lequel est fixée la sonde. Un tel dispositif s'il permet un déplacement précis de la sonde par rapport au bâti ne résoud cependant pas le problème du positionnement par rapport à l'aube explorée.

Le dispositif, selon l'invention, a pour but de limiter le plus possible les opérations manuelles et d'obtenir une exploration continue sur toute la longueur de la pale d'aube et parfaitement reproductible.

Selon l'invention, le dispositif est caractérisé en ce que, le chassis présentant deux grands côtés opposés, les moyens de positionnement sont constitués par deux crochets en C de même axe parallèle auxdits côtés opposés et situées près de l'un deux, une butée etant fixée sur l'autre desdits côtés opposés, le fond de la butée étant à une distance du fond des crochets approximativement égale à la largeur de la pale d'aube et en ce que les moyens de déplacement permettent un déplacement continu de la sonde le long des moyens de guidage rectilignes et parallèles auxdits côtés opposés.

Les explications et figures données ci-après à titre d'exemple permettront de comprendre comment l'invention peut être réalisée.

La figure 1 représente une vue en perspective du dispositif selon l'invention.

La figure 2 est une vue partiellement arrachée d'un crochet montrant le sabot en fin de course.

La figure 3 montre le dispositif placé sur une pale d'aube à contrôler.

Le contrôle des défauts d'une pièce métallique nécessite de manière connue, une sonde constituée d'un ou deux bobinages de fil conducteur relié à un appareillage électronique permettant de déceler les variations de champ dans la bobine.

La partie électronique de détection des défauts par la méthode des courants de Foucault est très classique, elle ne sera pas ci-après décrite.

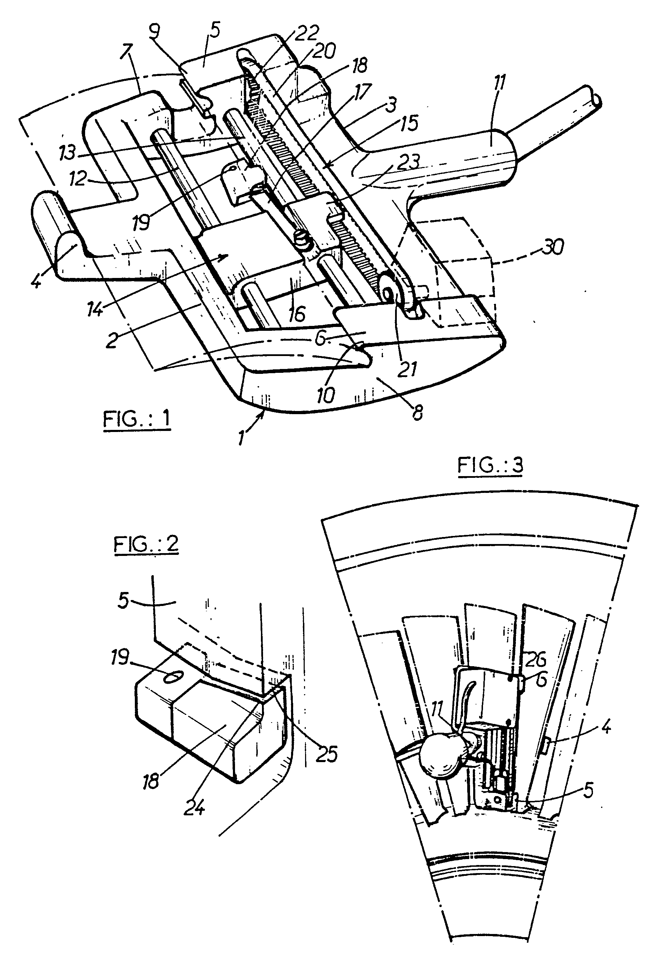

La figure 1 représente le dispositif selon l'invention, qui est constitué d'un bloc de positionnement et d'une sonde dont l'emplacement sera ultérieurement précisé.

Le bloc de positionnement se compose d'un châssis 1 présentant deux grands côtés 2 et 3 opposés et parallèles. Des moyens de positionnement 4, 5 et 6, susceptibles de coopérer avec les bords de fuite et d'attaque de la pale d'aube, sont disposés sur ou parallèlement aux côtés 2, 3 du châssis.

Selon l'exemple représenté, deux (5, 6) des moyens sont formés dans les petits côtés 7 et 8 du châssis de manière que leur axe commun soit parallèle aux côtés 2, 3. Les moyens 5 et 6 se présentent sous la forme d'un crochet en C et le moyen 4, d'une butée. La distance séparant le fond des crochets du fond de la butée est approximativement égale à la largeur de l'aube figurée en traits interrompus. Les extrémités recourbées 9 et 10 des crochets 5 et 6 viennent appuyer sur l'extrados de la pale d'aube.

Le châssis porte sur le côté 3 opposé à celui 2 portant la butée, un manche 11 permettant la manipulation du dispositif et sa mise en place sur les pales des aubes d'une roue, comme montré à la figure 3.

Des moyens de guidage de la sonde sont formés par au moins un élément parallèle à l'axe des crochets, cet axe étant lui-même parallèle au bord de la pale reposant dans les crochets. Selon l'exemple de réalisation représenté, deux éléments de guidage 12 et 13, parallèles sont fixés par leurs extrémités dans les petits côtés 7 et 8 du châssis parallèlement aux cotés 2 et 3. Un support de sonde 14 coulisse le long de ces éléments 12, 13, entraîné par des moyens de déplacement continu 15 de la sonde.

Le support de sonde est constitué d'un chariot 16 comportant deux paliers dans lesquels passent les tiges 12, 13. Il porte à sa partie supérieure un élément élastique 17, constitué d'un ressort à lame, dont une des extrémités est fixée sur le chariot et dont l'autre extrémité porte un sabot 18 dans lequel est logée la sonde 19. Le courbure de la lame 17 est prévue de manière que le sabot ou au moins sa partie portant la sonde vienne s'appuyer et puisse glisser sur l'intrados de la pale d'aube lorsque le support de sonde est entrainé par les moyens de déplacement 15. Ces moyens sont constitués d'un dispositif de transmission de mouvement linéaire qui, dans l'exemple de réalisation, est constitué d'une courroie crantée 20 montée entre deux pignons 21 et 22 disposés à chaque extrémité du chassis, parallèlement aux organes de guidage. L'un des pignons, 21 par exemple, est fixé sur l'axe d'un moteur 30 disposé dans ou sur le châssis. Un organe d'accrochage 23 prévu sur le chariot 16 coopère avec le crantage de la courroie pour entraîner le support de sonde 14.

Afin d'éviter l'endommagement du sabot 18 et de la sonde 19 qu'il contient, lors de la mise en place du dispositif sur la pale d'aube, il est prévu une position pour laquelle le ressort 17 est contraint de se courber contre le chariot 16 dégageant ainsi le sabot de la pale et permettant d'engager ou de dégager le bord de la pale des crochets. Ce résultat est atteint en prévoyant à l'extérieur du sabot 18 une rampe 24 (fig. 2) qui coopère avec une rampe conjuguée 25 prévue dans la partie supérieure du crochet 5. La position de départ de la sonde sera donc la position dans laquelle les rampes coopèrent et pour laquelle le sabot sera abaissé.

Des moyens de commande sont prévus en fin de course du chariot, afin d'assurer l'inversion du sens de marche du moteur et son arrêt.

L'utilisation (fig. 3) du dispositif est la suivante: on introduit à l'aide du manche 11 le dispositif par les trappes de visite dans l'espace de la roue d'aubes à contrôler, on glisse le dispositif entre deux pales d'auble et l'on place les crochets 5, 6 sur le bord d'attaque 26 de manière que la sonde soit sur l'intrados de la pale, on bascule le dispositif autour des crochets de manière à amener l'intérieur de la butée 4 contre le bord de fuite de la pale, on déclenche la mise en marche du moteur qui va faire parcourir un aller retour à la sonde contre l'intrados proche du bord d'attaque. On retire par une opération inverse à celle précédemment décrite le dispositif de la pale pour le positionner sur une pale voisine.

L'invention s'étend également aux dispositifs dans lesquels les moyens ci-dessus décrits sont remplacés par des moyens équivalents et notamment à l'utilisation de moyens de guidage, tels que rainures, queues d'aronde, ou de moyens de déplacement, tels que vis sans fin, ou encore de moyens combinés de guidage et de déplacement, tels qu'arbre à rainures hélicoïdales en circuit fermé qui réalise le mouvement de va-et-vient sans inversion du sens de marche du moteur.

Le dispositif décrit et représenté est prévu pour l'exploration d'une partie de l'intrados proche du bord d'attaque de la pale, il est compréhensible qu'en modifiant la position géométrique des différents organes, on peut adapter le dispositif à n'importe quelle zone de pale et à n'importe quelle forme de pale.

**Revendications**

1. Dispositif pour le contrôle in situ d'aubes de turbomachine par courants de Foucault, le dispositif comportant une sonde de détection et un bloc de positionnement de la sonde sur la pale d'aube à contrôler, ledit bloc étant constitué d'un chassis (1) portant des moyens de positionnement prévus pour coopérer avec au moins un des bords de la pale, des moyens de déplacement de la sonde et des moyens de guidage de la sonde caractérisé en ce que ledit châssis (1) présentant deux grands côtés opposés (2, 3), lesdits moyens de positionnement sont constitués par deux crochets en C (5, 6) de même axe parallèle auxdits côtés opposés (2, 3) et situés près de l'un (3) deux, une butée (4) étant fixée sur l'autre (2) desdits côtés opposés (2, 3), la distance séparant le fond des crochets du fond de la butée (4) étant approximativement égale à la largeur de la pale d'aube, lesdits moyens de guidage (12, 13) étant rectilignes et parallèles auxdits côtés opposés (2, 3) et lesdits moyens de déplacement de la sonde permettant un déplacement continu de la sonde le long desdits moyens de guidage.

2. Dispositif selon la revendication 1, caractérisé en ce que les moyens de guidage comportent au moins un organe de guidage d'un support de sonde (14).

3. Dispositif selon l'une des revendications 1 ou 2, caractérisé en ce que les moyens de déplacement de la sonde comportent un organe moteur (30) entraînant le support de sonde (14) le long des moyens de guidage.

4. Dispositif selon l'une des revendications précédentes caractérisé en ce que les moyens de guidage sont constitués par deux éléments (12, 13) parallèles, fixés par leur extrémité aux petits côtés (7, 8) du châssis et entre lesquels se déplace le support de sonde (14).

5. Dispositif selon la revendication 4, caractérisé en ce que le support de sonde est constitué d'un chariot (16) coopérant avec les éléments parallèles (12, 13), d'un organe élastique (17) dont une extrémité coopère avec le chariot (16), d'un sabot (18) fixé à l'autre extrémité de l'organe élastique (17), portant la sonde (19) et susceptible de glisser contre la pale d'aube.

6. Dispositif selon la revendication 5, caractérisé en ce que les moyens de déplacement sont constitués d'un organe d'accrochage (23) prévu sur le support de sonde (14), d'un dispositif de transmission (20, 21, 22) de mouvement rectiligne, et d'un organe moteur (30).

7. Dispositif selon la revendication 6, caractérisé en ce que le dispositif de transmission est une courroie crantée (20) montée entre deux pignons (21, 22), disposés à chaque extrémité du châssis parallèlement aux organes de guidage (12, 13), au moins un des pignons (21, 22) étant entraîné par un moteur (30) à deux sens de marche.

8. Dispositif selon l'une des revendications 5 à 7 caractérisé en ce que le sabot (18) porte une rampe (24) coopérant avec une rampe conjuguée (25) prévue dans un des crochets (5, 6) du bloc de positionnement de manière à supprimer le contact du sabot (18) avec la surface de la pale d'aube en fin de course.

9. Dispositif selon la revendication 7, caractérisé en ce qu'il est prévu des moyens de commande d'inversion du sens de marche du moteur (30), et des moyens d'arrêt pour les positions extrêmes du chariot support de sonde (14).

**Patentansprüche**

1. Vorrichtung zum Prüfen von Turbomaschinenschaufeln in Einbauposition durch Wirbelströme mit einer Detektorsonde und einem Block zu deren Positionierung auf dem zu prüfenden Schaufelblatt, wobei der genannte Block von einem Rahmen (1) gebildet ist, der Positionierungsmittel trägt, die mit wenigstens einem der Ränder des Schaufelblatts zusammenwirken, mit Mitteln zur Verschiebung der Detektorsonde sowie mit Führungsmitteln zur Führung des Detektorsonde, dadurch gekennzeichnet, daß der Rahmen (1) zwei einander gegenüberliegende große Seiten (2, 3) aufweist, daß die Mittel zur Positionierung der Detektorsonde von zwei C-förmigen Haken (5, 6) gebildet sind, die eine gemeinsame zu den einander gegenüberliegenden großen Seiten (2, 3) parallele Achse haben und in der Nähe einer (3) dieser Seiten angeordnet sind, daß an der anderen (2) der einander gegenüberliegenden großen Seiten (2, 3) ein Anschlag (4) befestigt ist, daß der Abstand zwischen der tiefsten Stelle der Haken (5, 6) und dem Boden des Anschlags (4) annähernd gleich ist der Breite des Schaufelblatts, daß die genannten Führungsmittel (12, 13) geradlinig und parallel zu den langen Seiten (2, 3) des Rahmens angeordnet sind, und daß die Mittel zur Verschiebung der Detektorsonde deren kontinuierliche Bewegung längs der Führungsmittel ermöglichen.

2. Vorrichtung nach Anspruch 1, dadurch gekennzeichnet, daß die Führungsmittel wenigstens ein Führungsorgan für einen Sondenträger (14) umfassen.

3. Vorrichtung nach einem der Ansprüche 1 oder 2, dadurch gekennzeichnet, daß die Mittel zur Verschiebung der Detektorsonde ein Antriebsorgan (30) umfassen, durch das der Sodenträger (14) längs der Führungsmittel bewegbar ist.

4. Vorrichtung nach einem der vorhergehenden Ansprüche, dadurch gekennzeichnet, daß die Führungsmittel von zwei parallelen Elementen (12, 13) gebildet sind, die mit ihren Enden an den beiden kurzen Seiten (7, 8) des Rahmens befestigt sind und zwischen denen der Sondenträger (14) verschiebbar ist.

5. Vorrichtung nach Anspruch 4, dadurch gekennzeichnet, daß der Sondenträger von einem mit den parallelen Elementen (12, 13) zusammenwirkenden Wagen (16), einem elastischen Organ (17), daß mit einem seiner Enden mit dem Wagen (16) zusammenwirkt, und einem an dem anderen Ende des elastischen Organs (17) befestigten, die Detektorsonde (19) tragenden Gleitschuh (18) gegenüber dem Schaufelblatt gleitend verschiebbaren Gleitschuh (18) gebildet ist.

6. Vorrichtung nach Anspruch 5, dadurch gekennzeichnet, daß die Mittel zur Verschiebung der Detektorsonde von einem an dem Sondenträger (14) vorgesehenen Mitnehmerorgan (23), eine Vorrichtung (21, 22, 23) zu geradlinigen Bewegungsübertragung und einem Antriebsorgan (30) gebildet ist.

7. Vorrichtung nach Anspruch 6, dadurch gekennzeichnet, daß die Vorrichtung zur Bewegungsübertragung aus einem Zahnriemen (20) besteht, der zwischen zwei Zahnrädern (21, 22) montiert ist, die an jeweils einem Ende des Rahmens parallel zu den Führungsorganen (12, 13) angeordnet sind, wobei wenigstens eines der Zahnräder (21, 22) von einem in seiner Drehrichtung umschaltbaren Motor (30) antreibbar ist.

8. Vorrichtung nach einen der Ansprüche 5 bis 7, dadurch gekennzeichnet, daß der Gleitschuh (18) eine Rampe (24) besitzt, die mit einer an einem der Haken (5, 6) des Positionierungsblocks vorgesehenen konjugierten Rampe (25) derart zusammenwirkt, daß der Kontakt zwischen dem Gleitschuh und der Oberfläche des Schaufelblatts am Ende der Bewegungsbahn unterbrochen wird.

9. Vorrichtung nach Anspruch 7, gekennzeichnet durch Steuermittel zur Drehrichtungsumkehr des Motors (30) und durch den Endpositionen des Wagens des Sondenträgers (14) zugeordnete Stillsetzmittel.

**Claims**

1. Device for testing blades of turbo-machines *in situ* by means of eddy currents, the device comprising a detection probe and a unit for positioning the probe on the blade to be tested, said unit being constituted by a frame (1) having positioning means designed to co-operate with at least one of the edges of the blade, means for moving the probe and means for guiding the probe, characterised in that said frame (1) has two long, opposed sides (2, 3), said positioning means are constituted by two C-shaped hooked portions (5, 6) having a common axis parallel with said opposed sides (2, 3) and situated near one of them (3), an abutment (4) being fixed on the other (2) of said opposite sides (2, 3), the distance separating the base of the hooked portions from the base of the abutment (4) being approximately equal to the width of the aerofoil portion of the blade, said guide means (12, 13) being rectilinear and parallel with said opposed sides (2, 3), and said means for moving the probe permitting a continuous motion of the probe along said guide means.

2. Device according to claim 1, characterised in that the guide means comprise at least one member for guiding a probe support (14).

3. Device according to one of claims 1 or 2, characterised in that the means for moving the probe comprise a drive member (30) driving the probe support (14) along the guide means.

4. Device according to one of the preceding means characterised in that the guide means are constituted by two parallel elements (12, 13), secured by their end to the short sides (7, 8) of the frame and between which the probe support (14) moves.

5. Device according to claim 4, characterised in that the probe support is constituted by a carriage (16), co-operating with the parallel elements (12, 13); by a resilient member (17), one end of which co-operates with the carriage (16); and by a shoe (18), secured at the other end of the resilient member (17), carrying the probe (19) and able to slide against the aerofoil portion of the blade.

6. Device according to claim 5, characterised in that the moving means are constituted by a coupling member (23) provided on the probe support (14), by a device for the transmission (20, 21, 22) of the rectilinear movement, and by a drive member (30).

7. Device according to claim 6, characterised in that the transmission means is a notched belt (20) mounted between two pinions (21, 22) disposed at each end of the frame parallel with the guide means (12, 13), at least one of the pinions (21, 22) being driven by a motor (30) operable in two directions.

8. Device according to one of claims 5 to 7, characterised in that the shoe (18) carries an inclined surface (24) co-operating with an associated inclined surface (25) provided on one of the hooked portions (5, 6) of the positioning unit in such a manner as to prevent the contact of the shoe (18) with the surface of the aerofoil portion of the blade at the end of the stroke.

9. Device according to claim 7, characterised in that means are provided for controlling the reversal of the direction of operation of the motor (30), and stop means are provided for the end positions of the probe support carriage (14).

0 054 441

FIG.: 1

FIG.: 2

FIG.: 3